# EUROPÄISCHE PATENTSCHRIFT

(11) **EP 2 766 166 B1**
(45) Veröffentlichungstag und Bekanntmachung des Hinweises auf die Patenterteilung: **16.12.2015**
(21) Anmeldenummer: 12781264.2
(22) Anmeldetag: 12.10.2012
(51) Int. Cl.: B29B 13/10, B29B 17/04, B29C 47/60, B02C 18/08, B01F 15/02, B02C 18/22, B29B 7/10, B29B 7/14, B29B 7/18, B29B 17/00, B29C 47/00, B29C 47/38

(54) **VORRICHTUNG ZUM AUFBEREITEN VON KUNSTSTOFFMATERIAL**
APPARATUS FOR PROCESSING PLASTIC MATERIAL
DISPOSITIF POUR PRÉPARER UNE MATIÈRE PLASTIQUE

(30) Priorität: 14.10.2011 AT 15072011
(43) Veröffentlichungstag der Anmeldung: 20.08.2014
(73) Patentinhaber: EREMA Engineering Recycling Maschinen und Anlagen Gesellschaft m.b.H., 4052 Ansfelden (AT)
(72) Erfinder: FEICHTINGER, Klaus, 4040 Linz (AT); HACKL, Manfred, 4040 Linz-Urfahr (AT)
(74) Vertreter: Wildhack & Jellinek
(86) Internationale Anmeldenummer: PCT/AT2012/050160
(87) Internationale Veröffentlichungsnummer: WO 2013/052988

(56) Entgegenhaltungen:
- EP-A1- 1 233 855
- EP-A1- 1 273 412
- DE-U1-202009 015 256

## Beschreibung

Die Erfindung betrifft eine Vorrichtung gemäß dem Oberbegriff des Anspruchs 1.

Aus dem Stand der Technik sind zahlreiche ähnliche Vorrichtungen unterschiedlicher Bauart bekannt, umfassend einen Aufnahmebehälter bzw. Schneidverdichter zum Zerkleinern, Erwärmen, Erweichen und Aufbereiten eines zu recycelnden Kunststoffmaterials sowie einen daran angeschlossenen Förderer bzw. Extruder zum Aufschmelzen des derart vorbereiteten Materials. Ziel ist es dabei, ein qualitativ möglichst hochwertiges Endprodukt, zumeist in Form eines Granulates, zu erhalten.

So sind beispielsweise in der EP 123 771 oder der EP 303 929 Vorrichtungen mit einem Aufnahmebehälter und einem daran angeschlossenen Extruder beschrieben, wobei das dem Aufnahmebehälter zugeführte Kunststoffmaterial durch Rotieren der Zerkleinerungs- und Mischwerkzeuge zerkleinert und in Thrombenumlauf gebracht und durch die eingebrachte Energie gleichzeitig erwärmt wird. Dadurch bildet sich eine Mischung mit ausreichend guter thermischer Homogenität aus. Diese Mischung wird nach entsprechender Verweilzeit aus dem Aufnahmebehälter in den Schneckenextruder ausgetragen, gefördert und dabei plastifiziert bzw. aufgeschmolzen. Der Schneckenextruder ist dabei etwa auf der Höhe der Zerkleinerungswerkzeuge angeordnet. Auf diese Weise werden die erweichten Kunststoffteilchen durch die Mischwerkzeuge aktiv in den Extruder gedrückt bzw. gestopft.

Die EP 1 283 855 B1 offenbart eine vorrichtung gemäß dem Oberbegriff des Anspruchs 1.

Die meisten dieser seit langem bekannten Konstruktionen befriedigen nicht im Hinblick auf die am Ausgang der Schnecke erhaltene Qualität des bearbeiteten Kunststoffmateriales und/oder im Hinblick auf den Ausstoß der Schnecke. Untersuchungen haben gezeigt, dass die Anforderungen an die dem Behälter nachfolgende Schnecke, zumeist eine Plastifizierschnecke, im Laufe des Betriebes ungleich sind.

Für thermisch und mechanisch homogenes Material stellt sich üblicherweise eine Qualitätsverbesserung des am Ausgang der Schnecke erhaltenen Gutes ein, wenn die Gangtiefe der Meteringszone der Schnecke sehr groß und die Schneckendrehzahl sehr gering gehalten wird. Untersuchungen haben gezeigt, dass der Grund dafür ist, dass das verarbeitete Material durch eine derartige Schneckengeometrie einer geringen Scherung unterworfen wird. Die Scherung des verarbeiteten Gutes (Schergeschwindigkeit) errechnet sich aus der Umfangsgeschwindigkeit der Schnecke, geteilt durch die Gangtiefe der Schnecke. Durch eine solchen Schneckengeometrie wird das Material mechanisch und thermisch nur gering beansprucht.

Wird jedoch Wert gelegt auf eine Ausstoßerhöhung der Schnecke oder eine Leistungsverbesserung etwa einer Zerreißer-Extruderkombination, dann muss die Schneckendrehzahl angehoben werden, was bedeutet, dass auch die Scherung angehoben wird. Dadurch wird aber das verarbeitete Material von der Schnecke mechanisch und thermisch höher beansprucht.

Sowohl bei langsam laufender und tief geschnittener Schnecke mit großer Gangtiefe als auch bei rasch laufender Schnecke wirkt sich aber die bereits erwähnte, unterschiedliche Qualität einzelner der Schnecke zugeführter Materialpartien, z.B. unterschiedliche Flockengröße und/oder unterschiedliche Temperatur des Kunststoffmateriales, nachteilig in Hinblick auf Inhomogenitäten des am Schneckenausgang erhaltenen Kunststoffmateriales aus. Um diese Inhomogenitäten auszugleichen, wird in der Praxis das Temperaturprofil des Extruders angehoben, was bedeutet, dass dem Kunststoff zusätzliche Energie zugeführt werden muss, was die erwähnten thermischen Schädigungen des Kunststoffmateriales und einen erhöhten Energiebedarf zur Folge hat. Außerdem wird dadurch das am Extruderausgang erhaltene Kunststoffmaterial in seiner Viskosität reduziert, also dünnflüssiger, was Schwierigkeiten bei der Weiterverarbeitung dieses Materiales mit sich bringt.

Daraus ist ersichtlich, dass die für den Erhalt einer guten Materialqualität am Schneckenausgang günstigen Verfahrensparameter einander widersprechen.

Die Extruderschnecke hat die grundsätzliche Aufgabe, das Kunststoffmaterial einzuziehen, zu fördern, aufzuschmelzen oder zu agglomerieren und anschließend zu homogenisieren, Dazu muss sie einen gewissen Druck aufbauen.

Grundsätzlich wird eine klassische kernprogressive Extruderschnecke in drei Funktionsbereiche unterteilt. Eine solche Drei-Zonen-Schnecke ist die gebräuchlichste Schneckenform, mit der eine große Anzahl von Materialtypen verarbeitet werden kann. In der Einzugszone wird das Material in den Bereich der Schnecke eingezogen und durch die Drehung der Schnecke weiterbefördert. In der Kompressionszone wird das Material durch die abnehmende Gangtiefe verdichtet und aufgeschmolzen oder agglomeriert. In der Meteringzone wird die Schmelze bzw. das Agglomerat auf die gewünschte Verarbeitungstemperatur gebracht und homogenisiert und vollständig aufgeschmolzen. Außerdem wird der nötige Druck aufgebaut, um den Werkzeugwiderstand zu überwinden, Dieser hat Einfluss auf die Durchsatzleistung.

Von wesentlicher Bedeutung für das Aufschmelz- bzw. Agglomerierverhalten des aus dem Schneidverdichter in den Extruder gelangenden vorbehandelten bzw. erweichten Polymermaterials und die schlussendlich erhaltene Endqualität des Produktes und in weiterer Folge für die Durchsatz- bzw. Ausstoßleistung des Extruders, sind demnach u.a. die Länge der einzelnen Bereiche bzw. Zonen, sowie die Parameter der Schnecke, z.B. deren Dicke, Gangtiefen etc..

Bei den hier vorliegenden Schneidverdichter-Extruder-Kombinationen liegen allerdings besondere Verhältnisse vor, da das Material, das in den Extruder gelangt, nicht direkt, unbehandelt und kalt eingebracht wird, sondern bereits im Schneidverdichter vorbehandelt wurde, d.h. erwärmt, erweicht und/oder teilkristallisiert, etc. wurde. Dies ist mitentscheidend für den Ablauf der Extrusion und die schlussendliche Qualität der Schmelze bzw. der Endproduktes

Die beiden Systeme, also, der Schneidverdichter und der Extruder, beeinflussen sich gegenseitig, und die Ergebnisse der Extrusion hängen stark von der Vorbehandlung ab, ebenso wie durch die Extrusion gewisse Parameter der Vorbehandlung ausgeglichen und beeinflusst werden können.

Ein wichtiger Bereich ist demzufolge die Schnittstelle zwischen dem Schneidverdichter und dem Extruder, also der Bereich, wo das vorbehandelte Material vom Schneidverdichter in den Extruder übergeführt wird. Einerseits ist dies eine rein mechanische Problemstelle, da hier zwei unterschiedlich arbeitende Vorrichtungen miteinander gekoppelt werden müssen. Zudem ist diese Schnittstelle auch für das Polymermaterial heikel, da das Material hier meist nahe dem Schmelzbereich in einem stark erweichtem Zustand vorliegt, aber nicht schmelzen darf. Ist die Temperatur zu gering, so sinkt der Durchsatz und die Qualität, ist die Temperatur zu hoch und findet an manchen Stellen eine unerwünschte Aufschmelzung statt, so verstopft der Einzug.

Außerdem ist eine genaue Dosierung und Fütterung des Extruders schwierig, da es sich um ein geschlossenes System handelt und kein direkter Zugang zum Einzug besteht, sondern die Fütterung des Materials in den Extruder aus dem Schneidverdichter heraus erfolgt, also nicht unmittelbar, beispielsweise über einen gravimetrischen Dosierer, beeinflusst werden kann.

Es ist somit entscheidend, diesen Übergang sowohl mechanisch überlegt, also auch mit Verständnis für die Polymereigenschaften, auszuführen und gleichzeitig auf die Wirtschaftlichkeit des Gesamtprozesses zu achten, also auf hohen Durchsatz und entsprechende Qualität. Hier sind teils gegensätzliche Voraussetzungen zu beachten.

Den eingangs erwähnten, aus dem Stand der Technik bekannten Vorrichtungen ist gemeinsam, dass die Förder- bzw. Drehrichtung der Misch- - und Zerkleinerungswerkzeuge und damit die Richtung, in der die Materialteilchen im Aufnahmebehälter umlaufen, und die Förderrichtung des Extruders im Wesentlichen gleich bzw. gleichsinnig sind. Diese bewusst so gewählte Anordnung war durch den Wunsch geleitet, das Material möglichst in die Schnecke zu stopfen bzw. diese zwangszufüttern. Dieser Gedanke, die Teilchen in Schneckenförderrichtung in die Förder- bzw. Extruderschnecke zu stopfen, war auch durchaus naheliegend und entsprach den gängigen Vorstellungen des Fachmannes, da die Teilchen dadurch nicht ihre Bewegungsrichtung umkehren müssen und somit keine zusätzliche Kraft für die Richtungsumkehr aufzuwenden ist. Es wurde dabei und bei davon ausgehenden Weiterentwicklungen immer danach getrachtet, eine möglichst hohe Schneckenauffüllung und eine Verstärkung dieses Stopfeffektes zu schaffen. Beispielsweise wurde auch versucht, den Einzugsbereich des Extruders konusartig zu erweitern oder die Zerkleinerungswerkzeuge sichelförmig zu krümmen, damit diese das erweichte Material spachtelartig in die Schnecke füttern können. Durch die zulaufseitige Versetzung des Extruders von einer radialen in eine tangentiale Position zum Behälter, wurde der Stopfeffekt noch weiter verstärkt und das Kunststoffmaterial vom umlaufenden Werkzeug noch stärker in den Extruder hineingefördert bzw. -gedrückt.

Derartige Vorrichtungen sind grundsätzlich funktionsfähig und arbeiten zufriedenstellend, wenngleich auch mit wiederkehrenden Problemen:
So wurde, beispielsweise bei Materialien mit einem geringen Energieinhait, wie z.B. PET-Fasern oder -folien, oder bei Materialien mit einem frühen Kfebrigkeits- oder Erweichungspunkt, wie z.B. Polymilchsäure (PLA), immer wieder der Effekt beobachtet dass das bewusste gleichsinnige Stopfen des Kunststoffmaterials in den Einzugsbereich des Extruders unter Druck zu einem frühzeitigen Aufschmelzen des Materials unmittelbar nach oder auch im Einzugsbereich des Extruders führt. Dadurch verringert sich einerseits die Förderwirkung des Extruders, zudem kann es auch zu einem teilweisen Rückfluss dieser Schmelze in den Bereich des Schneidverdichters bzw. Aufnahmebehälters kommen, was dazu führt, dass sich noch ungeschmolzene Flakes an die Schmelze anhaften, dadurch die Schmelze wieder abkühlt und teilweise erstarrt und sich auf diese Weise ein geschwulstartiges Gebilde bzw. Konglomerat aus teilweise erstarrter Schmelze und festen Kunststoffteilchen bildet. Dadurch verstopft der Einzug des Extruders und verkleben die Misch- und Zerkleinerungswerkzeuge. In weiterer Folge verringert sich der Durchsatz des Extruders, da keine ausreichende Befüllung der Schnecke mehr vorliegt. Zudem können sich dabei die Misch- und Zerkleinerungswerkzeuge festfahren. In der Regel muss in solchen Fällen die Anlage abgestellt werden und vollständig gesäubert werden.

Außerdem treten Probleme bei solchen Polymermaterialien auf, die im Schneidverdichter bereits bis nahe an ihren Schmelzbereich erwärmt wurden. Wird hierbei der Einzugsbereich überfüllt, schmilzt das Material auf und der Einzug lässt nach.

Auch bei, meist verstreckten, streifigen, faserigen Materialien mit einer gewissen Längenausdehnung und einer geringen Dicke bzw. Steifigkeit, also beispielsweise bei in Streifen geschnittenen Kunststofffolien, ergeben sich Probleme. Dies in erster Linie dadurch, dass sich das längliche Material am ablaufseitigen Ende der Einzugsöffnung der Schnecke festhängt, wobei ein Ende des Streifens in den Aufnahmebehälter ragt und das andere Ende in den Einzugsbereich. Da sowohl die Mischwerkzeuge als auch die Schnecke gleichsinnig laufen bzw. die gleiche Förderrichtungs- und Druckkomponente auf das Material ausüben, werden beide Enden des Streifens in die gleiche Richtung zug- und druckbeaufschlagt und kann sich der Streifen nicht mehr lösen. Dies führt wiederum zu einem Anhäufen des Materials in diesem Bereich, zu einer Verengung des Querschnitts der Einzugsöffnung und zu einem schlechteren Einzugsverhalten und in weiterer Folge zu Durchsatzeinbußen. Außerdem kann es durch den erhöhten Beschickungsdruck in diesem Bereich zu einem Aufschmelzen kommen, wodurch wiederum die eingangs erwähnten Probleme auftreten.

An derartige gleichsinnig drehende Schneidverdichter wurden unterschiedliche Extruder angeschlossen, wobei die Ergebnisse grundsätzlich durchaus akzeptabel und ansprechend waren. Die Anmelderin hat jedoch umfassende Untersuchungen angestellt, um das Gesamtsystem noch weiter zu verbessern.

Die vorliegende Erfindung setzt sich damit zur Aufgabe, die erwähnten Nachteile zu überwinden und eine Vorrichtung der eingangs geschilderten Art so zu verbessern, dass, neben den üblichen Materialien, auch empfindliche oder streifenförmige Materialien problemlos von der Schnecke eingezogen und bei hoher Materialqualität, möglichst platzsparend, zeiteffizient und energiesparend und mit hohem Durchsatz verarbeitet bzw. behandelt werden können.

Diese Aufgabe wird bei einer Vorrichtung der eingangs erwähnten Art durch die kennzeichnenden Merkmale des Anspruchs 1 gelöst.

Dabei ist zunächst vorgesehen, dass die gedachte Verlängerung der zentralen Längsachse des Extruders, wenn dieser nur eine einzige Schnecke aufweist, oder die Längsachse der der Einzugsöffnung nächstliegenden Schnecke, wenn der Extruder mehr als eine Schnecke aufweist, entgegen der Förderrichtung des Extruders an der Drehachse ohne diese zu schneiden vorbeiführt, wobei die Längsachse des Extruders, wenn dieser eine einzige Schnecke aufweist, oder die Längsachse der der Einzugsöffnung nächstliegenden Schnecke, ablaufseitig zu der zur Längsachse parallelen, von der Drehachse des Misch- und/oder Zerkleinerungswerkzeugs in Förderrichtung des Extruders nach außen gerichteten Radialen des Behälters um einen Abstand versetzt ist.

Damit ist, die Förderrichtung der Mischwerkzeuge und die Förderrichtung des Extruders nicht mehr, wie aus dem Stand der Technik bekannt, gleichsinnig, sondern zumindest geringfügig gegensinnig, wodurch der eingangs erwähnte Stopfeffekt verringert wird. Durch die bewusste Umkehrung der Drehrichtung der Misch- und Zerkleinerungswerkzeuge im Vergleich zu bislang bekannten Vorrichtungen, nimmt der Beschickungsdruck auf den Einzugsbereich ab und es verringert sich das Risiko einer Überfüllung. Überschüssiges Material wird auf diese Weise nicht mit übermäßigem Druck in den Einzugsbereich des Extruders gestopft bzw.. gespachtelt, sondern im Gegenteil wird überschüssiges Material sogar tendenziell wieder von dort entfernt, sodass zwar immer ausreichend Material im Einzugsbereich vorliegt, jedoch nahezu drucklos bzw. nur mit geringem Druck beaufschlagt wird. Auf diese Weise kann die Extruderschnecke ausreichend befüllt werden und immer ausreichend Material einziehen, ohne dass es zu einer Überfüllung der Schnecke und in weiterer Folge zu lokalen Druckspitzen kommt, bei denen das Material aufschmelzen könnte.

Auf diese Weise wird ein Aufschmelzen des Materials im Bereich des Extrudereinzugs verhindert, wodurch sich die betriebliche Effizienz erhöht, die Wartungsintervalle verlängern und die Stehzeiten durch allfällige Reparaturen und Säuberungsmaßnahmen verkürzt werden.

Durch die Verringerung des Beschickungsdruckes reagieren Schieber, mit denen der Befüllungsgrad der Schnecke in bekannter Weise reguliert werden kann, deutlich sensibler und der Füllgrad der Schnecke lässt sich hoch genauer einstellen. Insbesondere bei schwereren Materialien, wie etwa Mahlgütern aus High-Density Polyethylen (HDPE) oder PET, lässt sich so leichter der optimale Betriebspunkt der Anlage finden.

Außerdem hat es sich als überraschend vorteilhaft erwiesen, dass Materialien, die schon bis nahe an die Schmelze erweicht wurden, besser bei dem erfindungsgemäßen gegenläufigen Betrieb eingezogen werden. Insbesondere dann, wenn das Material schon in teigigem bzw. erweichtem Zustand vorliegt, schneidet die Schnecke das Material aus dem teigigen Ring, der der Behälterwand naheliegt. Bei einer. Drehrichtung in Förderrichtung der Extruderschnecke würde dieser Ring eher weitergeschoben werden und es könnte kein Abschaben durch die Schnecke erfolgen, wodurch der Einzug nachlassen würde. Dies wird durch die erfindungsgemäße Umkehr der Drehrichtung vermieden.

Außerdem können bei der Bearbeitung der oben beschriebenen streifigen bzw. faserigen Materialien die gebildeten Verhängungen bzw. Anhäufungen leichter gelöst werden bzw. werden gar nicht erst ausgebildet, da auf der in Drehrichtung der Mischwerkzeuge ablaufseitigen bzw. stromabwärts gelegenen Kante der Öffnung der Richtungsvektor der Mischwerkzeuge und der Richtungsvektor des Extruders in fast entgegengesetzte oder zumindest geringfügig gegensinnige Richtungen zeigen, wodurch sich ein länglicher Streifen nicht um diese Kante biegen und verhängen kann, sondern von der Mischtrombe im Aufnahmebehälter wieder mitgerissen wird.

Insgesamt verbessert sich durch die erfindungsgemäße Ausgestaltung das Einzugsverhalten und vergrößert sich der Durchsatz deutlich. Das Gesamtsystem aus Schneidverdichter und Extruder wird dadurch stabiler und leistungsfähiger.

Eng damit zusammen hängt die besondere Ausgestaltung der Schnecke, gerade im Einzugsbereich und in der Kompressionszone. Die Anmeldern hat hier überraschend herausgefunden, dass sich durch eine spezielle Schneckengeometrie das Einzugsverhalten noch weiter verbessern lässt. Hierbei ist vorgesehen, dass das L/D-Verhältnis der Schnecke ab dem Ende der Einzugsöffnung ≥ 7 ist. Anders ausgedrückt, ist das Verhältnis der Länge der Schnecke - gemessen ab dem in Förderrichtung der Schnecke stromabwärts gelegenen Rand der Einzugsöffnung bzw. ab dem auf diesem Rand liegenden, in Förderrichtung der Schnecke am weitesten stromabwärts gelegenen Punkt - bis zum behälterfernen, distalen Ende der Schnecke bzw. des Gehäuses, oder bis zur frühesten, am weitesten stromaufwärts gelegenen, im Gehäuse ausgebildeten, Austrittsöffnung für die Schmelze bzw. das Agglomerat, zum Nenndurchmesser der Schnecke ≥ 7. Ab dem in Förderrichtung der Schnecke stromabwärts gelegenen Rand der Einzugsöffnung beginnt der vollumfänglich vom Gehäuse umschlossene Teil der Schnecke. Beim Durchmesser der Schnecke handelt es sich um den mittleren Durchmesser im Bereich stromabwärts der Einzugsöffnung.

Weiters ist vorgesehen, dass die komprimierende Ausgestaltung der Schnecke erst ab einer Entfernung A von mehr als dem 1,5-fachen Durchmesser der Schnecke - gemessen ab dem in Förderrichtung der Schnecke stromabwärts gelegenen Rand der Einzugsöffnung bzw. ab dem auf diesem Rand liegenden, in Förderrichtung der Schnecke am weitesten stromabwärts gelegenen Punkt - beginnt. Damit ist ein schonendes Einbringen gewährleistet und allfällige örtliche Druckspitzen auf das Material bzw. Überfütterungen werden vermieden bzw. ausgeglichen.

Im Bereich davor ist die Schnecke im Wesentlichen kompressionslos, also nicht verdichtend, oder sogar dekomprimierend ausgebildet. Dies ist gerade im Bereich des Einzuges vorteilhaft.

Der Beginn der komprimierenden Ausgestaltung der Schnecke wird als derjenige Punkt verstanden, bei dem der Steigungswinkek der Schnecke ≥ 1 ist bzw. erstmals diesen Wert erreicht und größer wird. Im Bereich davor ist der Steigungswinkel < 1 und die Schnecke im Wesentlichen nicht bzw. kaum komprimierend. Dieser Steigungswinkel der Schnecke bestimmt sich, indem man einen Schnitt durch die Schnecke in der Mitte entlang ihrer zentralen Längsachse erstellt. In jedem Schneckengang wird der tiefste Punkt genommen und die Punkte werden miteinander verbunden. Daraus ergibt sich eine Gerade oder eine Kurve, die in Relation zur Längsachse der Schnecke oder zu einer Parallelen der Längsachse einen Winkel, den Steigungswinkel, aufweist. Der Steigungswinkel ist also ein Maß für die komprimierenden Eigenschaften der Schnecke bzw. für die verdichtende Einwirkung der Schnecke auf das Material. Je größer der Steigungswinkel ist, desto komprimierender wirkt die Schnecke. Im Bereich von < 1° ist die komprimierende Wirkung aber noch vernachlässigbar gering. Der Steigungswinkel kann zwar nicht negativ werden, bei einer dekomprimierend ausgestalteten Schnecke ist die Steigung dieser durch die Punkte gelegten Geraden aber in Förderrichtung gesehen negativ.

Die Vorsehung einer gewissen drucklosen Zone hat einerseits den Vorteil, ohne all zuviel Scherung, schonend Energie ins Material einzubringen z.B. durch am Extruder angebrachte Heizungen. Andererseits wird durch eine zu lange drucklose Zone die Bauweise des Extruders unnötig verlängert, noch dazu wenn gar nicht die Notwendigkeit besteht, die drucklose Zone zu lange zu machen, da das Material vom Schneidverdichter kommend, ohnehin bereits entsprechend vorgewärmt ist. Durch die Verwendung des vorgewärmten und homogenisierten Materials aus dem Schneidverdichter gibt es zusätzlich die Möglichkeit, die Kompressionszone kürzer zu machen, da bereits ausreichend innere Energie im Material vorhanden ist und nur mehr eine kurze Kompressionszone erforderlich ist, um das Material aufzuschmelzen.

Es wurde dadurch eine spezifische Ausgestaltung eines Schneidverdichter-Extruder-Systems geschaffen, umfassend einen besonderes ausgestalteten Schneidverdichter mit spezieller Drehrichtung der Werkzeuge, um das erweichte Material an den Extruder effektiv aber schonend zu übergeben, sowie einen besonders ausgestalteten Extruder, mit einer Schnecke, die gerade in Kombination mit diesem Schneidverdichter überraschend gut einzieht und das Material anschließend verdichtet. Wie erwähnt, ist das Einzugsverhalten mitentscheidend für die Materialqualität der Schmelze bzw. des Agglomerats und des Endproduktes und auch für die Durchsatzleistung des Systems.

### Vergleichsversuche der Anmelderin haben dabei folgendes ergeben:

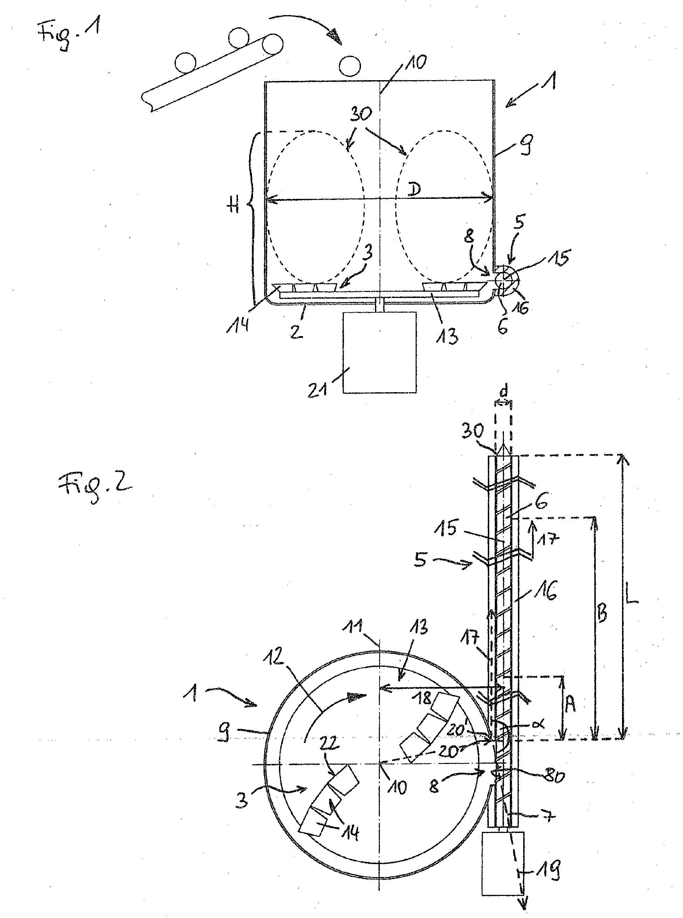

Es wurde hierbei einmal ein faseriges Biopolymer, nämlich Polymilchsäure (PLA) in einer erfindungsgemäßen Anlage gemäß Fig. 1 bzw. 2 (gegensinnig drehend, L/D=14, A=2) und einmal in einer konstruktiv gleichartigen bekannten Anlage (gleichsinnig drehend, L/D=15, A=2,5) bei ansonsten gleichen Parametern behandelt.

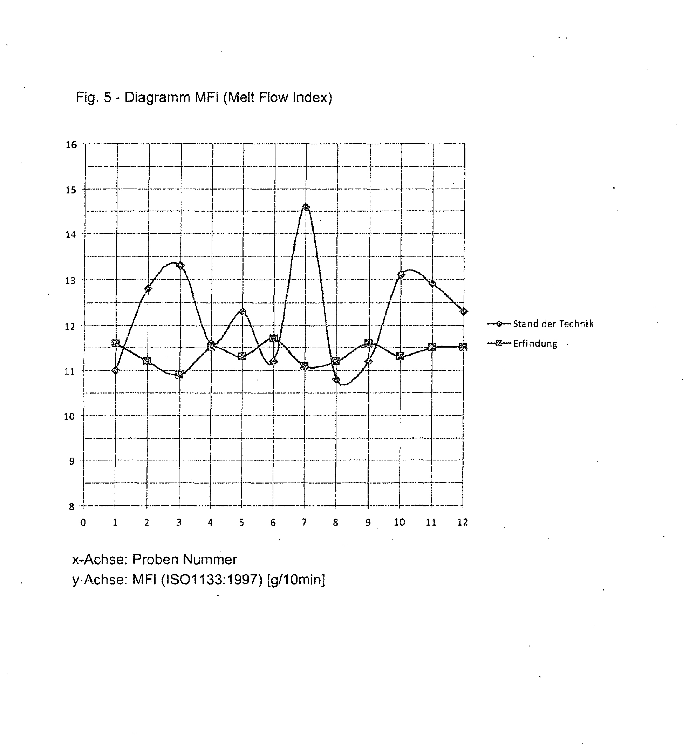

Es wurden kontinuierlich Proben der Schmelze am Ende des Extruders entnommen und jeweils der MFI-Wert (Melt-Flow-Index in g/10min) gemäß ISO1133:1997 bestimmt. Diese Ergebnisse sind in Fig. 5 zusammengefasst.

Man erkennt, dass sich bei der bekannten Anlage eine deutlich größere Schwankungsbreite der MFI-Werte einstellt. Das kann unter anderem darin begründet sein, dass die Befüllung der Schnecke ungleichmäßig ist, was bei Unterbefüllung zu oxidativem und thermischen Abbau des Materials führt und das Material dadurch dünnflüssiger wird und dadurch der MFI Wert höher ist. Dies könnte durch ein verstärktes Verhängen des Materials am Einzug bedingt sein, das phasenweise zu einer Unterbeschickung und phasenweise zu einer Überbeschickung führt, die dann zu diesen schwankenden Viskositätswerten führt.

Wünschenswert ist es, einen möglichst konstanten MFI-Wert zu erreichen und gleichzeitig einen MFI-Wert zu erhalten, der möglichst ähnlich wie den Ausgangswert des behandelten Material ist. Beides wird durch die erfindungsgemäße Anlage erreicht, und ist, wie in Fig. 5 ersichtlich, die Konstanz größer bzw. die Schwankungsbreite der MFI-Werte wesentlich geringer.

### Weitere vorteilhafte Ausgestaltungen der Erfindung werden durch die folgenden Merkmale beschrieben:

Eine besonders vorteilhafte Ausführungsform sieht vor, dass die komprimierende Ausgestaltung der Schnecke im Bereich vor einer Entfernung B des maximal 30-fachen, insbesondere des maximal 20-fachen, Durchmessers, gemessen ab dem in Förderrichtung der Schnecke stromabwärts gelegenen Rand oder dem am weitesten stromabwärts gelegenen Punkt der Einzugsöffnung, beginnt. Die drucklose Zone braucht bzw. darf nicht zu lange ausgebildet sein. Einerseits würde dies die Anlage unnötig verlängern, andererseits ist eine zu lange Förderung des Material bis zum Aufschmelzen bzw. Verdichten schwierig und für die Qualität ebenfalls nicht förderlich.

Gemäß einer weiteren vorteilhaften Ausgestaltung mit verbesserter Leistungsfähigkeit ist vorgesehen, dass das Verhältnis der Länge L der Schnecke, gemessen ab dem stromabwärts zur Förderichtung gelegenen Rand oder dem am weitesten stromabwärts gelegenen Punkt der Einzugsöffnung, bis zur im Gehäuse ausgebildeten Austrittsöffnung am behälterfernen Ende der Schnecke, zum Nenndurchmesser d der Schnecke ≥ 10, insbesondere ≥ 14 ist.

Weiters ist es vorteilhaft für das Einzugsverhalten, wenn die komprimierende Ausgestaltung der Schnecke erst ab einer Entfernung A von mehr als dem 2-fachen, vorzugsweise dem 3-fachen, Durchmesser d der Schnecke, gemessen ab dem in Förderrichtung der Schnecke stromabwärts gelegenen Rand oder dem am weitesten stromabwärts gelegenen Punkt der Einzugsöffnung, beginnt.

Eine konstruktiv vorteilhafte und eine effektive Schmelzleistung erbringende Ausgestaltung sieht vor, dass die Länge der komprimierenden Ausgestaltung der Schnecke, also bei einer 3-Zonen-Schnecke, die Länge der Kompressionszone bis zur Meteringzone, im Bereich des 0,5 bis 7-fachen, vorzugsweise des 1 bis 5-fachen, Durchmessers der Schnecke liegt.

Gemäß einer vorteilhaften Weiterentwicklung der Erfindung ist vorgesehen, dass der Extruder so am Aufnahmebehälter angeordnet ist, dass das Skalarprodukt aus dem tangential zum Flugkreis des radial äußersten Punktes des Misch- und/oder Zerkleinerungswerkzeugs bzw. zum an der Öffnung vorbeistreichenden Kunststoffmaterial und normal zu einer Radialen des Aufnahmebehälters ausgerichteten, in Dreh- bzw. Bewegungsrichtung des Misch- und/oder Zerkleinerungswerkzeugs weisenden Richtungsvektor (Richtungsvektor der Drehrichtung) und dem Richtungsvektor der Förderrichtung des Extruders in jedem einzelnen Punkt bzw. im gesamten Bereich der Öffnung bzw. in jedem einzelnen Punkt bzw. im gesamten Bereich unmittelbar radial vor der Öffnung, null oder negativ ist. Der Bereich unmittelbar radial vor der Öffnung ist als derjenige Bereich vor der Öffnung definiert, bei dem das Material knapp vor dem Durchtritt durch die Öffnung steht, aber noch nicht die Öffnung passiert hat. Auf diese Weise werden die eingangs erwähnten Vorteile erzielt und werden effektiv jegliche durch Stopfeffekte bewirkte Agglomeratbildungen im Bereich der Einzugsöffnung vermieden. Insbesondere kommt es dabei auch nicht auf die räumliche Anordnung der Mischwerkzeuge und der Schnecke zueinander an, beispielsweise muss die Drehachse nicht normal zur Bodenfläche oder zur Längsachse des Extruders bzw. der Schnecke ausgerichtet sein. Der Richtungsvektor der Drehrichtung und der Richtungsvektor der Förderrichtung liegen in einer, vorzugsweise horizontalen, Ebene, bzw. in einer normal zur Drehachse ausgerichteten Ebene.

Eine weitere vorteilhafte Ausgestaltung ergibt sich dadurch, dass der Richtungsvektor der Drehrichtung des Misch- und/oder Zerkleinerungswerkzeugs mit dem Richtungsvektor der Förderrichtung des Extruders einen Winkel von größer oder gleich 90° und kleiner oder gleich 180° einschließt, wobei der Winkel im Schnittpunkt der beiden Richtungsvektoren am stromaufwärts bezüglich der Dreh- bzw. Bewegungsrichtunct gelegenen Rand der Öffnung gemessen wird, insbesondere im am weitesten stromaufwärts gelegenen Punkt auf diesem Rand bzw. der Öffnung. Dadurch wird derjenige Winkelbereich beschrieben, in dem der Extruder am Aufnahmebehälter angeordnet werden muss, um die vorteilhaften Effekte zu erzielen. Dabei kommt es im gesamten Bereich der Öffnung bzw. in jedem einzelnen Punkt der Öffnung zu einer zumindest geringfügigen gegensinnigen Ausrichtung der auf das Material einwirkenden Kräfte bzw. im Extremfall zu einer druckneutralen Querausrichtung. In keinem Punkt der Öffnung ist das Skalarprodukt der Richtungsvektoren der Mischwerkzeuge und der Schnecke positiv, nicht einmal in einem Teilbereich der Öffnung tritt somit eine zu große Stopfwirkung auf.

Eine weitere vorteilhafte Ausgestaltung der Erfindung sieht vor, dass der Richtungsvektor der Dreh- bzw. Bewegungsrichtung mit dem Richtungsvektor der Förderrichtung einen Winkel zwischen 170° und 180° einschließt, gemessen im Schnittpunkt der beiden Richtungsvektoren in der Mitte der Öffnung. Eine solche Anordnung trifft beispielsweise zu, wenn der Extruder tangential am Schneidverdichter angeordnet ist.

Um sicherzustellen, dass keine zu große Stopfwirkung auftritt, kann vorteilhafterweise vorgesehen sein, dass der Abstand bzw. die Versetzung der Längsachse zur Radialen größer als oder gleich groß wie der halbe Innendurchmesser des Gehäuses des Extruders bzw. der Schecke ist.

Weiters kann es in diesem Sinne vorteilhaft sein, den Abstand bzw. die Versetzung der Längsachse zur Radialen größer gleich 7 %, noch vorteilhafter größer gleich 20 %, des Radius des Aufnahmebehälters zu bemessen. Bei Extrudern mit einem verlängerten Einzugsbereich bzw. einer Nutenbuchse oder erweiterten Tasche kann es vorteilhaft sein, wenn dieser Abstand bzw. diese Versetzung größer als oder gleich groß wie der Radius des Aufnahmebehälters ist. Insbesondere trifft dies für Fälle zu, bei denen der Extruder tangential an den Aufnahmebehälter angeschlossen ist bzw. tangential zum Querschnitt des Behälters verläuft.

Dabei ist insbesondere vorteilhaft, wenn die Längsachse des Extruders bzw. der Schnecke bzw. die Längsachse der der Einzugsöffnung nächstliegenden Schnecke oder die Innenwandung des Gehäuses oder die Umhüllende der Schecke tangential zur Innenseite der Seitenwand des Behälters verläuft, wobei vorzugsweise die Schnecke an ihrer Stirnseite mit einem Antrieb verbunden ist und an ihrem gegenüberliegenden Stirnende zu einer am Stirnende des Gehäuses angeordneten Austrittsöffnung, insbesondere einem Extruderkopf, fördert.

Bei radial versetzt, jedoch nicht tangential angeordneten, Extrudern ist vorteilhafterweise vorgesehen, dass die gedachte Verlängerung der Längsachse des Extruders entgegen der Förderrichtung den Innenraum des Aufnahmebehälters zumindest abschnittsweise als Sekante durchsetzt.

Es ist vorteilhaft, wenn vorgesehen ist, dass die Öffnung unmittelbar und direkt und ohne längere Beabstandung oder Übergabestrecke, z.B. einer Förderschnecke, mit der Einzugsöffnung verbunden ist. Damit ist eine effektive und schonende Materialübergabe möglich.

Die Umkehr der Drehrichtung der im Behälter umlaufenden Misch- und Zerkleinerungswerkzeuge kann keinesfalls nur willkürlich oder aus Versehen erfolgen, und man kann - weder bei den bekannten Vorrichtungen noch bei der erfindungsgemäßen Vorrichtung - die Mischwerkzeuge nicht ohne Weiteres in Gegenrichtung rotieren lassen, insbesondere deshalb nicht, da die Misch- und Zerkleinerungswerkzeuge in gewisser Weise asymmetrisch bzw. richtungsorientiert so angeordnet sind, dass sie nur auf eine einzige Seite bzw. in eine Richtung wirken. Würde man eine solche Apparatur bewusst in die falsche Richtung drehen, so würde sich weder eine gute Mischtrombe ausbilden, noch würde das Material ausreichend zerkleinert oder erwärmt werden. Jeder Schneidverdichter hat somit seine fix vorgegebene Drehrichtung der Misch- und Zerkleinerungswerkzeuge.

In diesem Zusammenhang ist es besonders vorteilhaft, wenn vorgesehen ist, dass die auf das Kunststoffmaterial einwirkenden in Dreh- bzw. Bewegungsrichtung weisenden vorderen Bereiche bzw. Vorderkanten der Misch- und/oder Zerkleinerungswerkzeuge unterschiedlich ausgebildet, gekrümmt, angestellt bzw. angeordnet sind im Vergleich zu den in Dreh- bzw. Bewegungsrichtung hinteren bzw. nachlaufenden Bereichen.

Eine vorteilhafte Anordnung sieht dabei vor; dass auf dem Misch- und/oder. Zerkleinerungswerkzeug Werkzeuge und/oder Messer angeordnet sind, die in Dreh- bzw. Bewegungsrichtung auf das Kunststoffmaterial erwärmend, zerkleinernd und/oder schneidend einwirken. Die Werkzeuge und/oder Messer können entweder direkt an der Welle befestigt sein oder sind vorzugsweise auf einem, insbesondere parallel zur Bodenfläche, angeordneten drehbaren Werkzeugträger bzw. einer Trägerscheibe angeordnet bzw. darin ausgebildet oder daran, gegebenenfalls einstückig, angeformt.

Grundsätzlich sind die erwähnten Effekte nicht nur bei stark komprimierenden aufschmelzenden Extrudern bzw. Agglomeratoren relevant, sondern auch bei weniger komprimierenden Förderschnecken. Auch hier werden lokale Überfütterungen vermieden.

Bei einer weiteren besonders vorteilhaften Ausgestaltung ist vorgesehen, dass der Aufnahmebehälter im wesentlichen zylindrisch mit einer ebenen Bodenfläche und einer dazu vertikal ausgerichteten zylindermantelförmigen Seitenwand ist. Konstruktiv einfach ist es weiters, wenn die Drehachse mit der zentralen Mittelachse des Aufnahmebehälters zusammenfällt. Bei einer weiteren vorteilhaften Ausgestaltung ist vorgesehen, dass die Drehachse oder die zentrale Mittelachse des Behälters vertikal und/oder normal zur Bodenfläche ausgerichtet sind. Durch diese besonderen Geometrien wird das Einzugsverhalten bei einer konstruktiv stabilen und einfach aufgebauten Vorrichtung optimiert.

In diesem Zusammenhang ist es auch vorteilhaft, vorzusehen, dass das Misch- und/oder Zerkleinerungswerkzeug, oder, falls mehrere übereinander angeordnete Misch- und/oder Zerkleinerungswerkzeuge vorgesehen sind, das unterste, bodennächste Misch- und/oder Zerkleinerungswerkzeug, sowie die Öffnung in geringem Abstand zur Bodenfläche, insbesondere im Bereich des untersten Viertels der Höhe des Aufnahmebehälters angeordnet sind. Der Abstand wird dabei definiert und gemessen von der untersten Kante der Öffnung bzw. der Einzugsöffnung bis zum Behälterboden im Randbereich des Behälters. Da die Eckkante meist gerundet ausgebildet ist, wird der Abstand von der untersten Kante der Öffnung entlang der gedachten Verlängerungen der Seitenwand nach unten bis zur gedachten Verlängerung des Behälterbodens nach außen gemessen. Gut geeignete Abstände sind 10 bis 400 mm.

Weiters ist es für die Bearbeitung vorteilhaft, wenn die radial äußersten Kanten der Misch- und/oder Zerkleinerungswerkzeuge bis dicht an die Seitenwand heranreichen.

Der Behälter muss nicht unbedingt eine kreiszylindrische Form aufweisen, wenngleich diese Form aus praktischen und fertigungstechnischen Gründen vorteilhaft ist. Von der Kreiszylinderform abweichende Behälterformen, etwa kegelstumpfförmige Behälter oder zylinderische Behälter mit elliptischem oder ovalem Grundriss, müssen auf einen kreiszylindrischen Behälter gleichen Fassungsvolumens umgerechnet werden, unter der Annahme, dass die Höhe dieses fiktiven Behälters gleich dessen Durchmesser ist. Behälterhöhen, die hierbei die sich einstellende Mischtrombe (unter Berücksichtigung des Sicherheitsabstandes) wesentlich übersteigen, bleiben unberücksichtigt, da diese übermäßige Behälterhöhe nicht genutzt wird und daher auf die Materialverarbeitung keinen Einfluss mehr hat.

Unter dem Begriff Extruder bzw. Verdichter werden in vorliegendem Text sowohl Extruder verstanden, mit denen das Material vollständig oder teilweise aufgeschmolzen wird, z.B. mit einer klassischen Drei-Zonen-Schnecke, als auch Extruder, mit denen das erweichte Material nur agglomeriert, jedoch nicht aufgeschmolzen wird. Bei Agglomerierschnecken wird das Material nur kurzzeitig stark komprimiert und geschert, nicht aber plastifiziert. Die Agglomerierschnecke liefert daher an ihrem Ausgang Material, welches nicht vollkommen geschmolzen ist, sondern von nur an ihrer Oberfläche angeschmolzenen Teilchen besteht, die gleichsam einer Sinterung zusammengebackt sind. In beiden Fällen wird jedoch über die Schnecke Druck auf das Material ausgeübt und dieses verdichtet.

Bei den in den nachfolgenden Figuren beschriebenen Beispielen sind durchwegs komprimierende Einwellen- bzw. Einschneckenextruder dargestellt. Alternativ ist jedoch auch die Vorsehung von Doppel- oder Mehrwellenextrudern, insbesondere mit mehreren identischen Schnecken, die zumindest gleiche Durchmesser d aufinreisen, möglich.

Weitere Merkmale und Vorteile der Erfindung ergeben sich aus der Beschreibung der folgenden nicht einschränkend zu verstehenden Ausführungsbeispiele des Erfindungsgegenstandes, welche in den Zeichnungen schematisch und nicht maßstabsgetreu dargestellt sind:
Fig. 1 zeigt einen Vertikalschnitt durch eine erfindungsgemäße Vorrichtung mit etwa tangential angeschlossenem Extruder.
Fig. 2 zeigt einen Horizontalschnitt durch die Ausführungsform von Fig. 1.
Fig. 3 zeigt eine weitere Ausführungsform mit minimaler Versetzung.
Fig. 4 zeigt eine weitere Ausführungsform mit größerer Versetzung.
Fig. 5 fasst die Ergebnisse der Versuche zusammen.

Weder die Behälter, noch die Schnecken oder die Mischwerkzeuge sind in den Zeichnungen maßstäblich, weder als solche, noch im Verhältnis zueinander. So sind z.B. in Wirklichkeit die Behälter meist größer oder die Schnecken länger, als hier dargestellt.

Die in Fig. 1 und Fig. 2 dargestellte vorteilhafte Schneidverdichter-Extruder-Kombination zum Aufbereiten bzw. Recyclieren von Kunststoffmaterial weist einen kreiszylindrischen Behälter bzw. Schneidverdichter bzw. Zerreißer 1 mit einer ebenen, horizontalen Bodenfläche 2 und einer normal dazu ausgerichteten, vertikalen, zylindermantelförmigen Seitenwand 9 auf.

In geringem Abstand zur Bodenfläche 2, maximal in etwa 10 bis 20 %, gegebenenfalls weniger, der Höhe der Seitenwand 9 - gemessen von der Bodenfläche 2 zum obersten Rand der Seitenwand 9 - ist eine parallel zur Bodenfläche 2 ausgerichtete, ebene Trägerscheibe bzw. ein Werkzeugträger 13 angeordnet, die/der um eine zentrale Drehachse 10, die gleichzeitig die zentrale Mittelachse des Behälters 1 ist, in die mit einem Pfeil 12 markierte Dreh- bzw. Bewegungsrichtung 12 drehbar ist. Die Trägerscheibe 13 ist über einen Motor 21 angetrieben, der sich unterhalb des Behälters 1 befindet. Auf der Oberseite der Trägerscheibe 13 sind Messer bzw. Werkzeuge, z.B. Schneidmesser, 14 angeordnet, die gemeinsam mit der Trägerscheibe 13 das Misch- und/oder Zerkleinerungswerkzeug 3 bilden.

Wie schematisch angedeutet, sind die Messer 14 auf der Trägerscheibe 13 nicht symmetrisch angeordnet, sondern sind auf ihren in die Dreh- bzw. Bewegungsrichtung 12 weisenden vorderen Kanten 22 besonders ausgebildet, angestellt bzw. angeordnet, um auf das Kunststoffmaterial mechanisch spezifisch einwirken zu können. Die radial äußersten Kanten der Misch- und Zerkleinerungswerkzeuge 3 reichen bis relativ nahe, etwa 5 % des Radius 11 des Behälters 1, an die Innenfläche der Seitenwand 9 heran.

Der Behälter 1 besitzt oben eine Einfüllöffnung, durch die das zu verarbeitende Gut, z.B. Portionen aus Kunststofffolien, z.B. mittels einer Fördereinrichtung in Richtung des Pfeils eingeworfen wird. Alternativ kann vorgesehen sein, dass der Behälter 1 geschlossen und zumindest auf ein technisches Vakuum evakuierbar ist, wobei das Material über ein Schleusensystemen eingebracht wird. Dieses Gut wird von den umlaufenden Misch- und/oder Zerkleinerungswerkzeugen 3 erfasst und in Form einer Mischtrombe 30 hochgewirbelt, wobei das Gut entlang der vertikalen Seitenwand 9 hochsteigt und annähernd im Bereich der wirksamen Behälterhöhe H durch Schwerkrafteinwirkung wieder nach innen und unten in den Bereich der Behältermitte zurückfällt. Die wirksame Höhe H des Behälters 1 ist annähernd gleich seinem Innendurchmesser D, Im Behälter 1 bildet sich also eine Mischtrombe 30 aus, bei der das Material sowohl von oben nach unten als auch in Drehrichtung 12 herumgewirbelt wird. Eine solche Vorrichtung kann somit aufgrund der besonderen Anordnung der Misch- und Zerkleinerungswerkzeuge 3 bzw. der Messer 14 nur mit der vorgegebenen Dreh- bzw. Bewegungsrichtung 12 betrieben werden und die Drehrichtung 12 kann nicht ohne Weiteres oder ohne zusätzliche Änderungen vorzunehmen, umgedreht werden.

Das eingebrachte Kunststoffmaterial wird von den umlaufenden Misch- und Zerkleinerungswerkzeugen 3 zerkleinert, gemischt und dabei über die eingebrachte mechanische Reibungsenergie erwärmt und erweicht, jedoch nicht aufgeschmolzen. Nach einer gewissen Verweilzeit im Behälter 1 wird das homogenisierte, erweichte, teigige aber nicht geschmolzene Material, wie im Folgenden im Detail erörtert wird, durch eine Öffnung 8 aus dem Behälter 1 ausgebracht, in den Einzugsbereich eines Extruders 5 gebracht und dort von einer Schnecke 6 erfasst und in weiterer Folge aufgeschmolzen.

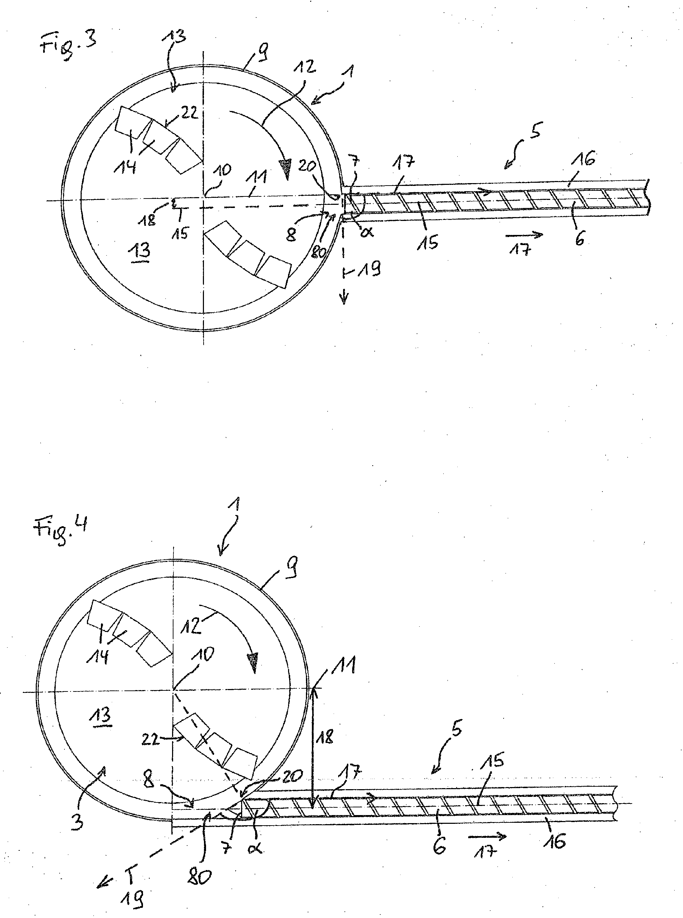

Auf der Höhe des im vorliegenden Fall einzigen Zerkieinerungs- und Mischwerkzeugs 3 ist in der Seitenwand 9 des Behälters 1 die besagte Öffnung 8 ausgebildet, durch die das vorbehandelte Kunststoffmaterial aus dem Inneren des Behälters 1 ausbringbar ist. Das Material wird an einen tangential am Behälter 1 angeordneten Einschnecken-Extruder 5 übergeben, wobei das Gehäuse 16 des Extruders 5 eine in seiner Mantelwand liegende Einzugsöffnung 80 für das von der Schnecke 6 zu erfassende Material aufweist. Eine solche Ausführungsform hat den Vorteil, dass die Schnecke 6 vom in der Zeichnung unteren Stirnende her durch einen nur schematisch dargestellten Antrieb angetrieben werden kann, sodass das in der Zeichnung obere Stirnende der Schnecke 6 vom Antrieb freigehalten werden kann. Dies ermöglicht es, die Austrittsöffnung für das von der Schnecke 6 geförderte, plastifizierte oder agglomerierte Kunststoffmaterial an diesem oberen Stirnende anzuordnen, z.B. in Form eines nicht dargestellten Extruderkopfes. Das Kunststoffmaterial kann daher ohne Umlenkung von der Schnecke 6 durch die Austrittsöffnung gefördert werden, was bei den Ausführungsformen nach den Figuren 3 und 4 nicht ohne weiteres möglich ist.

Die Einzugsöffnung 80 steht mit der Öffnung 8 in Materialförder- bzw. übergabeverbindung und ist im vorliegenden Fall direkt, unmittelbar und ohne längeres Zwischenstück oder Beabstandung mit der Öffnung 8 verbunden. Lediglich ein sehr kurzer Übergabebereich ist vorgesehen.

Im Gehäuse 16 ist eine komprimierende Schnecke 6 um ihre Längsachse 15 drehbar gelagert. Die Längsachse 15 der Schnecke 6 und des Extruders 5 fallen zusammen. Der Extruder 5 fördert das Material in Richtung des Pfeils 17. Der Extruder 5 ist ein an sich bekannter, herkömmlicher Extruder, bei dem das erweichte Kunststoffmaterial komprimiert und dadurch aufgeschmolzen wird, und die Schmelze dann auf der gegenüberliegenden Seite am Extruderkopf austritt.

Die Misch- und/oder Zerkleinerungswerkzeuge 3 bzw. die Messer 14 liegen auf nahezu derselben Höhe bzw. Ebene wie die zentrale Längsachse 15 des Extruders 5. Die äußersten Enden der Messer 14 sind ausreichend von den Stegen der Schnecke 6 beabstandet.

Bei der Ausführungsform gemäß Fig. 1 und 2 ist der Extruder 5, wie erwähnt, tangential an den Behälter 1 angeschlossen bzw. verläuft tangential zu dessen Querschnitt. Die gedachte Verlängerung der zentralen Längsachse 15 des Extruders 5 bzw. der Schnecke 6 entgegen der Förderrichtung 17 des Extruders 5 nach hinten, führt in der Zeichnung neben der Drehachse 10 vorbei, ohne diese zu schneiden. Die Längsachse 15 des Extruders 5 bzw. der Schnecke 6 ist ablaufseitig zu der zur Längsachse 15 parallelen, von der Drehachse 10 des Misch- und/oder Zerkleinerungswerkzeugs 3 in Förderrichtung 17 des Extruders 5 nach außen gerichteten Radialen 11 des Behälters 1 um einen Abstand 18 versetzt. Im vorliegenden Fail durchsetzt die nach hinten gedachte Verlängerung der Längsachse 15 des Extruders 5 den Innenraum des Behälters 1 nicht, sondern läuft knapp daneben vorbei.

Der Abstand 18 ist etwas größer als der Radius des Behälters 1. Der Extruder 5 ist damit geringfügig nach außen versetzt bzw. der Einzugsbereich ist etwas tiefer.

Unter den Begriffen "entgegengerichtet", "gegenläufig" oder "gegensinnig" wird hier jegliche Ausrichtung der Vektoren zueinander verstanden, die nicht spitzwinkelig ist, wie im folgenden im Detail erläutert wird.

Anders ausgedrückt, ist das Skalarprodukt aus einem Richtungsvektor 19 der Drehrichtung 12, der tangential zum Flugkreis des äußersten Punktes des Misch- und/oder Zerkleinerungsirverkzeugs 3 bzw. tangential zum an der Öffnung 8 vorbeistreichenden Kunststoffmateria! ausgerichtet ist und der in Dreh- bzw. Bewegungsrichtung 12 der Misch- und/oder Zerkleinerungswerkzeuge 3 weist, und einem Richtungsvektor 17 der Förderrichtung des Extruders 5, der in Förderichtung parallel zur zentralen Längsachse 15 verläuft, in jedem einzelnen Punkt der Öffnung 8 bzw. im Bereich radial unmittelbar vor der Öffnung 8, überall null oder negativ, nirgendwo jedoch positiv.

Bei der Einzugsöffnung in Fig. 1 und 2 ist das Skalarprodukt aus dem Richtungsvektor 19 der Drehrichtung 12 und dem Richtungsvektor 17 der Förderrichtung in jedem Punkt der Öffnung 8 negativ.

Der Winkel a zwischen dem Richtungsvektor 17 der Förderrichtung und dem Richtungsvektor der Drehrichtung 19, gemessen im am weitesten stromaufwärts bezüglich der Drehrichtung 12 gelegenen Punkt 20 der Öffnung 8 bzw. am am weitesten stromaufwärts gelegenen Rand der Öffnung 8, beträgt, nahezu maximal, etwa 170°.

Schreitet man entlang der Öffnung 8 in Fig. 2 nach unten, also in Drehrichtung 12, weiter, so wird der stumpfe Winkel zwischen den beiden Richtungsvektoren immer größer. In der Mitte der Öffnung 8 ist der Winkel zwischen den Richtungsvektoren etwa 180° und das Skalarprodukt maximal negativ, weiter unterhalb davon wird der Winkel sogar > 180° und das Skalarprodukt nimmt wieder etwas ab, bleibt aber immer negativ. Diese Winkel sind allerdings nicht mehr als Winkel a bezeichnet, da sie nicht in Punkt 20 gemessen sind.

Ein in Fig. 2 nicht eingezeichneter, in der Mitte bzw. im Zentrum der Öffnung 8 gemessener Winkel β zwischen dem Richtungsvektor der Drehrichtung 19. und dem Richtungsvektor der Förderrichtung 17 beträgt etwa 178° bis 180°.

Die Vorrichtung gemäß Fig. 2 stellt den ersten Grenzfall bzw. Extremwert dar. Bei einer solchen Anordnung ist eine sehr schonende Stopfwirkung bzw. eine besonders vorteilhafte Fütterung möglich und ist eine solche Vorrichtung insbesondere für sensible Materialien, die nahe dem Schmelzbereich bearbeitet werden oder für langstreifiiges Gut vorteilhaft.

In Fig. 2 wurden die kennzeichnenden Längen und Abschnitte L, A bzw. B exemplarisch eingezeichnet. Diese sind allerdings, ebenso wie die übrigen in den Figuren gezeigten Merkmale, nur schematisch und nicht maßstabsgetreu oder verhältnismäßig korrekt und wurden teilweise durch Unterbrechungen schematisch gekürzt. In den Ausführungsformen der Fig. 3 und 4 wurden diese Längen und Abschnitte nicht eingezeichnet.

Das Verhältnis der Länge L der Schnecke 6 - gemessen ab dem in Förderrichtung der Schnecke 6 stromabwärts gelegenen Rand 20' der Einzugsöffnung 80 bzw. ab dem auf diesem Rand 20' liegenden, in Förderrichtung der Schnecke 6 am weitesten stromabwärts gelegenen Punkt 20 - bis zur frühesten, am weitesten stromaufwärts zur Förderrichtung gelegenen Austrittsöffnung 30 im Gehäuse 16 beim behälterfernen, distalen Ende 31 der Schnecke 6, zum Nenndurchmesser d der Schnecke 6 ist bei diesem bevorzugten Ausführungsbeispiel Ud = 21.

Die ebenfalls in der schematischen Zeichnung nicht dargestellte, komprimierenden Ausgestaltung der Schnecke 6 beginnt erst ab einer Entfernung A von dem 6-fachen Durchmesser d der Schnecke 6, gemessen ab dem Rand 20' der Einzugsöffnung 80. Im Bereich vor Beginn ihrer komprimierenden Ausgestaltung ist die Schnecke 6 im Wesentlichen nicht komprimierend bzw. kompressionslos ausgebildet, übt also keinen Druck auf das von der Schnecke 6 erfasste Material aus.

Damit beginnt die komprimierende Ausgestaltung der Schnecke 6, wie gefordert, auch im Bereich vor einer Entfernung B des maximal 30-fachen Durchmessers d, gemessen ab dem Rand 20' der Einzugsöffnung 80.

Die Fig. 3 und 4. dienen in erster Linie zur Illustration der Anschlussmöglichkeiten des Extruders hinsichtlich der Drehrichtung. Die Werte für L, B und A sind nicht eingezeichnet.

In Fig. 3 ist eine alternative Ausführungsform gezeigt, bei der der Extruder 5 nicht tangential, sondern mit seiner Stirnseite 7 an den Behälter 1 angeschlossen ist. Die Schnecke 6 und das Gehäuse 16 des Extruders 5 sind im Bereich der Öffnung 8 an die Kontur der Innenwand des Behälters 1 angepasst und bündig zurückversetzt. Kein Teil des Extruders 5 ragt durch die Öffnung 8 hindurch in den Innenraum des Behälters 1 hinein.

Der Abstand 18 entspricht hier etwa 5 bis 10 % des Radius 11 des Behälters 1 und etwa dem halben Innendurchmesser d des Gehäuses 16. Diese Ausführungsfrom stellt somit den zweiten Grenzfall bzw. Extremwert mit kleinstmöglichem Versatz bzw. Abstand 18 dar, bei dem die Dreh- bzw. Bewegungsrichtung 12 der Misch- und/oder Zerkleinerurigswerkzeuge 3 der Förderrichtung 17 des Extruders 5 zumindest geringfügig entgegengerichtet ist und zwar über die gesamte Fläche der Öffnung 8.

Das Skalarprodukt ist in Fig. 3 in demjenigen grenzwertigen, am weitesten stromaufwärts gelegenen, Punkt 20 genau null, der am, am weitesten stromaufwärts gelegenen, Rand der Öffnung 8 liegt. Der Winkel a zwischen dem Richtungsvektor 17 der Förderrichtung und dem Richtungsvektar der Drehrichtung 19 ist, gemessen in Punkt 20 von Fig. 3, genau 90°. Schreitet man entlang der Öffnung 8 nach unten, also in Drehrichtung 12, weiter, so wird der Winkel zwischen den Richtungsvektoren immer größer und zu einem stumpfen Winkel > 90° und das Skalarprodukt wird gleichzeitig negativ. An keinem Punkt oder in keinem Bereich der Öffnung 8 ist das Skalaprodukt jedoch positiv oder der Winkel kleiner als 90°. Dadurch kann nicht einmal in einem Teilbereich der Öffnung 8 eine lokale Überfütterung erfolgen bzw. kann es in keinem Bereich der Öffnung 8 zu einer schädlichen überhöhten Stopfwirkung kommen.

Darin besteht auch ein entscheidender Unterschied zu einer rein radialen Anordnung, da in Punkt 20 bzw. an der Kante 20' bei einer voll radialen Anordnung des Extruders 5 ein Winkel α < 90° vorliegen würde und diejenigen Bereiche der Öffnung 8, die in der Zeichnung oberhalb der Radialen 11 bzw. stromaufwärts bzw. zulaufseitig davon gelegen sind, hätten ein positives Skalarprodukt. Damit könnte sich in diesen Bereichen lokal aufgeschmolzenes Kunststoffgut ansammeln.

In Fig. 4 ist eine weitere alternative Ausführungsform dargestellt, bei der der Extruder 5 ablaufseitig etwas weiter versetzt ist als bei Fig. 3, jedoch noch nicht tangential wie in Fig. 1 und 2. im vorliegenden Fall, wie auch bei Fig. 3, durchsetzt die nach hinten gedachte Verlängerung der Längsachse 15 des Extruders 5 den Innenraum des Behälters 1 sekantenartig. Dies hat zur Folge, dass - gemessen in Umfangsrichtung des Behälters 1 - die Öffnung 8 breiter ist als bei der Ausführungsform nach Fig. 3. Auch der Abstand 18 ist entsprechend größer als bei Fig. 3, jedoch etwas kleiner als der Radius 11. Der Winkel α gemessen in Punkt 20 beträgt etwa 150°, wodurch gegenüber der Vorrichtung von Fig. 3 die Stopfwirkung verringert wird, was für gewisse sensible Polymere vorteilhafter ist. Der vom Behälter 1 aus gesehene rechte innere Rand bzw. die Innenwandung des Gehäuses 16 schließt tangential an den Behälter 1 an, wodurch im Unterschied zu Fig. 3 keine stumpfe Übergangskante ausgebildet ist. In diesem am weitesten stromabwärts gelegenen Punkt der Öffnung 8, in Fig. 4 ganz links, ist der Winkel etwa 180°.

## Patentansprüche

1. Vorrichtung zum Vorbehandeln und anschließenden Plastifizieren oder Agglomerieren von Kunststoffen, insbesondere von thermoplastischem Abfallkunststoff zu Recyclingzwecken, mit einem Behälter (1) für das zu verarbeitende Material, wobei im Behälter (1) zumindest ein um eine Drehachse (10) drehbares umlaufendes Misch- und/oder Zerkleinerungswerkzeug (3) zur Mischung, Erwärmung und gegebenenfalls Zerkleinerung des Kunststoffmaterials angeordnet ist,
wobei in einer Seitenwand (9) des Behälters (1) im Bereich der Höhe des oder des untersten, bodennächsten Misch- und/oder Zerkleinerungswerkzeugs (3) eine Öffnung (8) ausgebildet ist, durch die das vorbehandelte Kunststoffmaterial aus dem Inneren des Behälters (1) ausbringbar ist,
wobei zumindest ein Extruder bzw. Verdichter (5) zur Aufnahme des vorbehandelten Materials vorgesehen ist, mit zumindest einer in einem Gehäuse (16) rotierenden, komprimierenden, plastifizierenden oder agglomerierenden Schnecke (6); wobei das Gehäuse (16) eine an seiner Stirnseite (7) oder in seiner Mantelwand liegende Einzugsöffnung (80) für das von der Schnecke (6) zu erfassende Material aufweist, und die Einzugsöffnung (80) mit der Öffnung (8) in Verbindung steht, wobei
die gedachte Verlängerung der zentralen Längsachse (15) des Extruders (5) oder der der Einzugsöffnung (80) nächstliegenden Schnecke (6) entgegen der Förderrichtung (17) des Extruders (5) an der Drehachse (10) ohne diese zu schneiden vorbeiführt,
und das Verhältnis der Länge (L) der Schnecke (6), gemessen ab dem in Förderrichtung der Schnecke (6) stromabwärts gelegenen Rand (20') oder dem am weitesten stromabwärts gelegenen Punkt (20) der Einzugsöffnung (80), bis zum Ende der Schnecke (6) oder bis zur frühesten, am weitesten stromaufwärts zur Förderrichtung der Schnecke (6) gelegenen Austrittsöffnung (30) im Gehäuse (16) für die Schmelze beim behälterfernen, distalen Ende (31) der Schnecke (6), zum Nenndurchmesser (d) der Schnecke (6) ≥ 7 ist,
**dadurch gekennzeichnet, dass** die Längsachse (15) des Extruders (5) oder der der Einzugsöffnung (80) nächstliegenden Schnecke (6) ablaufseitig und in Dreh- bzw. Bewegungsrichtung (12) des Misch- und/oder Zerkleinerungswerkzeugs (3) zu der zur Längsachse (15) parallelen, von der Drehachse (10) des Misch- und/oder Zerkleinerungswerkzeugs (3) in Förderrichtung (17) des Extruders (5) nach außen gerichteten Radialen (11) des Behälters (1) um einen Abstand (18) versetzt ist,
und dass die komprimierende Ausgestaltung der Schnecke (6) erst ab einer Entfernung (A) von mehr als dem 1,5-fachen Durchmesser (d) der Schnecke (6), gemessen ab dem in Förderrichtung der Schnecke (6) stromabwärts gelegenen Rand (20') oder dem am weitesten stromabwärts gelegenen Punkt (20) der Einzugsöffnung (80), beginnt,
wobei unter dem Beginn der komprimierenden Ausgestaltung der Schnecke (6) derjenige Punkt verstanden wird, bei dem der Steigungswinkel der Schnecke (6) erstmals ≥ 1° wird, wobei die Schnecke (6) im Bereich vor dem Beginn der komprimierenden Ausgestaltung im Wesentlichen kompressionslos oder dekomprimierend ausgebildet ist und der Steigungswinkel < 1° ist, wobei der Steigungswinkel der Winkel zwischen der zentralen Längsachse (15) der Schnecke (6) bzw. einer Parallelen dazu und einer durch die jeweils tiefsten Punkte jedes Schneckengangs gelegten Geraden oder Kurve ist.

2. Vorrichtung nach Anspruch 1, **dadurch gekennzeichnet, dass** die komprimierende Ausgestaltung der Schnecke (6) im Bereich vor einer Entfernung (B) des maximal 30-fachen, vorzugsweise des maximal 20-fachen, Durchmessers (d), gemessen ab dem in Förderrichtung der Schnecke (6) stromabwärts gelegenen Rand (20') der Einzugsöffnung (80), beginnt.

3. Vorrichtung nach Anspruch 1 oder 2, **dadurch gekennzeichnet, dass** das Verhältnis der Länge (L) der Schnecke (6), gemessen ab dem in Förderrichtung der Schnecke (6) stromabwärts gelegenen Rand (20') der Einzugsöffnung (80), bis zur frühesten Austrittsöffnung (30), zum Nenndurchmesser (d) der Schnecke (6) ≥ 10, insbesondere ≥ 14 ist.

4. Vorrichtung nach einem der Ansprüche 1 bis 3, **dadurch gekennzeichnet, dass** die komprimierende Ausgestaltung der Schnecke (6) erst ab einer Entfernung (A) von mehr als dem 2-fachen, vorzugsweise dem 3-fachen, Durchmesser (d) der Schnecke (6), gemessen ab dem in Förderrichtung der Schnecke (6) stromabwärts gelegenen Rand (20') der Einzugsöffnung (80), beginnt.

5. Vorrichtung nach einem der Ansprüche 1 bis 4, **dadurch gekennzeichnet, dass** die Länge der komprimierenden Ausgestaltung der Schnecke (6) im Bereich des 0,5 bis 7-fachen, vorzugsweise des 1 bis 5-fachen, Durchmessers (d) der Schnecke (6) liegt.

6. Vorrichtung nach einem der Ansprüche 1 bis 5, **dadurch gekennzeichnet, dass** für einen mit dem Behälter (1) in Verbindung stehenden Extruder (5) das Skalarprodukt gebildet aus dem tangential zum Flugkreis des radial äußersten Punktes des Misch- und/oder Zerkleinerungswerkzeugs (3) bzw. tangential zu dem an der Öffnung (8) vorbeibewegten Kunststoffmaterial und normal zu einer Radialen (11) des Behälters (1) ausgerichteten, in Dreh- bzw. Bewegungsrichtung (12) des Misch- und/oder Zerkleinerurigswerkzeugs (3) weisenden Richtungsvektor der Drehrichtung (19) und dem Richtungsvektor (17) der Förderrichtung des Extruders (5) in jedem einzelnen Punkt bzw. im gesamten Bereich der Öffnung (8) bzw. unmittelbar radial vor der Öffnung (8) null oder negativ ist.

7. Vorrichtung nach einem der Ansprüche 1 bis 6, **dadurch gekennzeichnet, dass** der Richtungsvektor der Drehrichtung (19) des radial äußersten Punktes des Misch- und/oder Zerkleinerungswerkzeugs (3) und der Richtungsvektor (17) der Förderrichtung des Extruders (5) einen Winkel (α) von größer oder gleich 90° und kleiner oder gleich 180° einschließen, gemessen im Schnittpunkt der beiden Richtungsvektoren (17,19) am bezüglich der Dreh- bzw.. Bewegungsrichtung (12) des Misch- und/oder Zerkleinerungswerkzeugs (3) stromaufwärts gelegenen, zulaufseitigen Rand der Öffnung (8), insbesondere im am weitesten stromaufwärts gelegenen Punkt (20) auf diesem Rand bzw. der Öffnung (8).

8. Vorrichtung nach einem der Ansprüche 1 bis 7, **dadurch gekennzeichnet, dass** der Richtungsvektor (19) der Dreh- bzw. Bewegungsrichtung (12) und der Richtungsvektor (17) der Förderrichtung des Extruders (5) einen Winkel (β) zwischen 170° und 180° einschließen, gemessen im Schnittpunkt der beiden Richtungsvektoren (17,19) in der Mitte der Öffnung (8).

9. Vorrichtung nach einem der Ansprüche 1 bis 8, **dadurch gekennzeichnet, dass** der Abstand (18) größer als oder gleich groß wie der halbe Innendurchmesser des Gehäuses (16) des Extruders (5) bzw. der Schnecke (6) ist, und/oder größer gleich 7 %, vorzugsweise größer gleich 20 %, des Radius des Behälters (1) ist oder dass der Abstand (18) größer als oder gleich groß wie der Radius des Behälters (1) ist.

10. Vorrichtung nach einem der Ansprüche 1 bis 8, **dadurch gekennzeichnet, dass** die gedachte Verlängerung, der Längsachse (15) des Extruders (5) entgegen der Förderrichtung nach Art einer Sekante zum Querschnitt des Behälters (1) angeordnet ist und den Innenraum des Behälters (1) zumindest abschnittsweise durchsetzt.

11. Vorrichtung nach einem der Ansprüche 1 bis 8, **dadurch gekennzeichnet, dass** der Extruder (5) tangential an den Behälter (1) angeschlossen ist bzw. tangential zum Querschnitt des Behälters (1) verläuft bzw. dass die Längsachse (15) des Extruders (5) bzw. der Schnecke (6) bzw. die Längsachse der der Einzugsöffnung (80) nächstliegenden Schnecke (6) oder die Innenwandung des Gehäuses (16) oder die Umhüllende der Schecke (6) tangential zur Innenseite der Seitenwand (9) des Behälters (1) verläuft, wobei vorzugsweise die Schnecke (6) an ihrer Stirnseite (7) mit einem Antrieb verbunden ist und an ihrem gegenüberliegenden Stirnende zu einer am Stirnende des Gehäuses (16) angeordneten Austrittsöffnung, insbesondere einem Extruderkopf, fördert.

12. Vorrichtung nach einem der Ansprüche 1 bis 11, **dadurch gekennzeichnet, dass** die Öffnung (8) unmittelbar und direkt und ohne wesentliche Beabstandung, insbesondere ohne Übergabestrecke oder Förderschnecke, mit der Einzugsöffnung (80) verbunden ist.

13. Vorrichtung nach einem der Ansprüche 1 bis 12, **dadurch gekennzeichnet, dass** das Misch- und/oder Zerkleinerungswerkzeug (3) Werkzeuge und/oder Messer (14) umfasst, die in Dreh- bzw. Bewegungsrichtung (12) auf das Kunststoffmaterial zerkleinernd, schneidend und erwärmend einwirken, wobei die Werkzeuge und/oder Messer (14) vorzugsweise auf oder an einem, insbesondere parallel zur Bodenfläche (2), angeordneten, drehbaren Werkzeugträger (13), insbesondere einer Trägerscheibe (13), ausgebildet oder angeordnet sind,
und/oder
dass die auf das Kunststoffmaterial einwirkenden in Dreh- bzw. Bewegungsrichtung (12) weisenden vorderen Bereiche bzw. Vorderkanten (22) der Misch- und/oder Zerkleinerungswerkzeuge (3) oder der Messer (14) unterschiedlich ausgebildet, angestellt, gekrümmt und/oder angeordnet sind im Vergleich zu den in Dreh- bzw. Bewegungsrichtung (12) hinteren bzw. nachlaufenden Bereichen.

14. Vorrichtung nach einem der Ansprüche 1 bis 13, **dadurch gekennzeichnet, dass** der Behälter (1) im wesentlichen kreiszylindrisch mit einer ebenen Bodenfläche (2) und einer dazu vertikal ausgerichteten zylindermantelförmigen Seitenwand (9) ausgebildet ist und/oder die Drehachse (10) der Misch- und/oder Zerkleinerungswerkzeuge (3) mit der zentralen Mittelachse des Behälters (1) zusammenfällt und/oder die Drehachse (10) oder die zentrale Mittelachse vertikal und/oder normal zur Bodenfläche (2) ausgerichtet sind,
und/oder
dass der unterste Werkzeugträger (13) bzw. das unterste der Misch- und/oder Zerkleinerungswerkzeuge (3) und/oder die Öffnung (8) bodennah in geringem Abstand zur Bodenfläche (2), insbesondere im Bereich des untersten Viertels der Höhe des Behälters (1), vorzugsweise in einem Abstand zur Bodenfläche (2) von 10 mm bis 400 mm angeordnet sind.

15. Vorrichtung nach einem der Ansprüche 1 bis 14, **dadurch gekennzeichnet, dass** der Extruder (5) ein Einzelschneckenextruder (6) mit einer einzigen komprimierenden Schnecke (6) ist oder ein Doppel- oder Mehrfachschneckenextruder ist, wobei die Durchmesser d der einzelnen Schnecken (6) untereinander gleich groß sind.

## Claims

1. Apparatus for the pretreatment and subsequent plastification or agglomeration of plastics, in particular of thermoplastics waste for recycling purposes, with a container (1) for the material to be processed, where the arrangement has, in the container (1), at least one mixing and/or comminution implement (3) which rotates around an axis (10) of rotation and which is intended for the mixing, heating and optionally comminution of the plastics material,
where an aperture (8) through which the pretreated plastics material can be removed from the interior of the container (1) is formed in a side wall (9) of the container (1) in the region of the level of the, or of the lowest, mixing and/or comminution implement (3) that is closest to the base,
where at least one extruder or compressor (5) is provided to receive the pretreated material, and has at least one screw (6) which rotates in a housing (16) and which has compressing, plastifying or agglomerating action, where the housing (16) has, located at its end (7) or in its jacket wall, an intake aperture (80) for the material to be received by the screw (6), and there is connection between the intake aperture (80) and the aperture (8), where
the imaginary continuation of the central longitudinal axis (15) of the extruder (5) or of the screw (6) closest to the intake aperture (80), in a direction opposite to the direction (17) of conveying of the extruder (5), passes, and does not intersect, the axis (10) of rotation,
and the ratio of the length (L) of the screw (6), measured from the edge (20') situated downstream in the direction of conveying of the screw (6),or from the point (20) of the intake aperture (80) situated furthest downstream, to the end of the screw (6) or to the first melt discharge aperture (30) in the housing (16), situated furthest upstream in relation to the conveying direction of the screw (6) at the end (31) of the screw (6) that is distal, remote from the container, to the nominal diameter (d) of the screw (6) is ≥ 7, **characterized in that**,
on the outflow side or in the direction (12) of rotation or of movement of the mixing and/or comminution implement (3), an offset distance (18) between the longitudinal axis (15) of the extruder (5) or of the screw (6) closest to the intake aperture (80), and the radius (11) of the container (1) that is parallel to the longitudinal axis (15) and that proceeds outwards from the axis (10) of rotation of the mixing and/or comminution implement (3) in the conveying direction (17) of the extruder (5),
and that the compressing format of the screw (6) begins only from a distance (A) of more than 1.5 times the diameter (d) of the screw (6), measured from the edge (20') situated downstream in the conveying direction of the screw (6) or from the point (20) of the intake aperture (80) situated furthest downstream, where the beginning of the compressing format of the screw (6) means the point at which the helix angle of the screw (6) is for the first time ≥ 1°, where the design of the screw (6) in the region in front of the beginning of the compressing format is in essence compression less or decompressing and the helix angle is < 1°, where the helix angle is the angle between the central longitudinal axis (15) of the screw (6) or parallel thereto and a straight line or curve drawn through the respectively lowest points of each screw channel.

2. Apparatus according to Claim 1, **characterized in that** the compressing format of the screw (6) begins in the region in front of a distance (D) which is maximally 30 times, preferably maximally 20 times, the diameter (d) measured from the edge (20') of the intake aperture (80) situated downstream in the direction of conveying of the screw (6).

3. Apparatus according to Claim 1 or 2, **characterized in that** the ratio of the length (L) of the screw (6), measured from the edge (20') of the intake aperture (80) situated downstream in the direction of conveying of the screw (6) to the first discharge aperture (30), to the nominal diameter (d) of the screw (6) is ≥ 10, in particular ≥ 14.

4. Apparatus according to any of Claims 1 to 3, **characterized in that** the compressing format of the screw (6) begins only from a distance (A) of more than twice, preferably three times, the diameter (d) of the screw (6), measured from the edge (20') of the intake aperture (80) situated downstream in the conveying direction of of the screw (6).

5. Apparatus according to any of Claims 1 to 4, **characterized in that** the length of the compressing format of the screw (6) is in the range from 0.5 to 7 times, preferably from 1 to 5 times, the diameter (d) of the screw (6).

6. Apparatus according to any of Claims 1 to 5, **characterized in that**, for an extruder (5) in contact with the container (1), the scalar product of the direction vector that is associated with the direction (19) of rotation and that is tangential to the circle described by the radially outermost point of the mixing and/or comminution implement (3) or that is tangential to the plastics material transported past the aperture (8) and that is normal to a radius (11) of the container (1), and that points in the direction (12) of rotation or of movement of the mixing and/or comminution implement (3) and of the direction vector (17) that is associated with the direction of conveying of the extruder (5) at each individual point or in the entire region of the aperture (8) or immediately radially in front of the aperture (8),is zero or negative.

7. Apparatus according to any of Claims 1 to 6, **characterized in that** the angle (α) included between the direction vector that is associated with the direction (19) of rotation of the radially outermost point of the mixing and/or comminution implement (3) and the direction vector (17) that is associated with the direction of conveying of the extruder (5) is greater than or equal to 90° and smaller than or equal to 180°, measured at the point of intersection of the two direction vectors (17, 19) at the inflow-side edge of the aperture (8) that is situated upstream in relation to the direction (12) of rotation or of movement of the mixing and/or comminution implement (3), in particular at the point (20) that is on the said edge or on the aperture (8) and is situated furthest upstream.

8. Apparatus according to any of Claims 1 to 7, **characterized in that** the angle (β) included between the direction vector (19) that is associated with the direction (12) of rotation or of movement and the direction vector (17) that is associated with the direction of conveying of the extruder (5) is from 170° to 180°, measured at the point of intersection of the two direction vectors (17, 19) in the middle of the aperture (8).

9. Apparatus according to any of Claims 1 to 8, **characterized in that** the distance (18) is greater than or equal to half of the internal diameter of the housing (16) of the extruder (5) or of the screw (6), and/or greater than or equal to 7%, preferably greater than or equal to 20%, of the radius of the container (1), or **in that** the distance (18) is greater than or equal to the radius of the container (1).

10. Apparatus according to any of Claims 1 to 9, **characterized in that** the imaginary continuation of the longitudinal axis (15) of the extruder (5) in a direction opposite to the direction of conveying is arranged in the manner of a secant in relation to the cross section of the container (1), and, at least in sections, passes through the space within the container (1).

11. Apparatus according to any of Claims 1 to 10, **characterized in that** the extruder (5) is attached tangentially to the container (1) or runs tangentially in relation to the cross section of the container (1), or **in that** the longitudinal axis (15) of the extruder (5) or of the screw (6) or the longitudinal axis of the screw (6) closest to the intake aperture (80) runs tangentially with respect to the inner side of the side wall (9) of the container (1), or the inner wall of the housing (16) does so, or the enveloping end of the screw (6) does so, where it is preferable that there is a drive connected to the end (7) of the screw (6), and that the screw provides conveying, at its opposite end, to a discharge aperture, in particular an extruder head, arranged at the end of the housing (16).

12. Apparatus according to any of Claims 1 to 11, **characterized in that** there is immediate and direct connection between the aperture (8) and the intake aperture (80), without substantial separation, in particular without transfer section or conveying screw.

13. Apparatus according to any of Claims 1 to 12, **characterized in that** the mixing and/or comminution implement (3) comprises implements and/or blades (14) which, in the direction (12) of rotation or of movement, have a comminuting, cutting and heating effect on the plastics material, where the implements and/or blades (14) are preferably arranged or formed on or at a rotatable implement carrier (13) which is in particular a carrier disc (13) and which is in particular arranged parallel to the basal surface (2) and/or that the manner of formation, set-up, curvature and/or arrangement of the frontal regions or frontal edges (22) that are associated with the mixing and/or comminution implements (3) or with the blades (14), act on the plastics material and point in the direction (12) of rotation or of movement, differs when comparison is made with the regions that, in the direction (12) of rotation or of movement, are at the rear or behind.

14. Apparatus according to any of Claims 1 to 13, **characterized in that** the container (1) is in essence cylindrical with circular cross section and with a level basal surface (2) and with, orientated vertically in relation thereto, a side wall (9) which has the shape of the jacket of a cylinder, and/or the axis (10) of rotation of the mixing and/or comminution implements (3) coincides with the central axis of the container (1), and/or the axis (10) of rotation or the central axis are orientated vertically and/or normally in relation to the basal surface (2) and/or that the lowest implement carrier (13) or the lowest of the mixing and/or comminution implements (3) and/or the aperture (8) are arranged close to the base at a small distance from the basal surface (2), in particular in the region of the lowest quarter of the height of the container (1), preferably at a distance of from 10 mm to 400 mm from the basal surface (2).

15. Apparatus according to any of Claims 1 to 14, **characterized in that** the extruder (5) is a single-screw extruder (6) with a single compression screw (6), or is a twin- or multiscrew extruder, where the diameters d of the individual screws (6) are all identical.

## Revendications

1. Dispositif permettant de prétraiter puis de plastifier ou d'agglomérer des matières plastiques, plus particulièrement d'une matière plastique thermoplastique à base de déchets, à des fins de recyclage, avec un récipient (1) pour le matériau à traiter, au moins un outil de mélange et/ou de broyage (3) circulaire rotatif autour d'un axe de rotation (10) étant prévu pour le mélange, le chauffage et, le cas échéant, le broyage du matériau de type matière plastique,
une ouverture (8) étant prévue dans une paroi latérale (9) du récipient (1), au niveau de la hauteur de l'outil de mélange et/ou de broyage (3) le plus et le proche du fond, à travers laquelle le matériau de type matière plastique prétraité peut être extrait de l'intérieur du récipient (1)
au moins une extrudeuse ou un compresseur (5) étant prévu pour le logement du matériau prétraité, avec au moins une vis sans fin (6) rotative, comprimante, plastifiante ou agglomérante dans un boîtier (16) ; le boîtier (16) comprenant une ouverture d'alimentation (80) se trouvant au niveau de son côté frontal (7) ou dans sa paroi de revêtement, pour le matériau à entraîner par la vis sans fin (6) et l'ouverture d'alimentation (80) étant relié avec l'ouverture (8),
le prolongement imaginaire de l'axe longitudinal central (15) de l'extrudeuse (5) ou de la vis sans fin (6) la plus proche de l'ouverture d'alimentation (80) étant guidé contre la direction de transport (17) de l'extrudeuse (5) au niveau de l'axe de rotation (10) sans couper celui-ci, et le rapport entre la longueur (L) de la vis sans fin (6), mesurée à partir du bord (20') situé en aval dans la direction de transport de la vis sans fin (6) ou du point (20) situé le plus loin en aval de l'ouverture d'alimentation (80), jusqu'à l'extrémité de la vis sans fin (6) ou jusqu'à l'ouverture d'alimentation (30) située la plus loin en aval dans la direction de transport de la vis sans fin (6), dans le boîtier (16), pour la coulée au niveau de l'extrémité (31) distale éloignée du récipient de la vis sans fin (6), par rapport au diamètre nominal (d) de la vis sans fin (6) étant ≥ 7,
**caractérisé en ce que** l'axe longitudinal (15) de l'extrudeuse (5) ou de la vis sans fin (6) la plus proche de l'ouverture d'alimentation (80), est décalé, du côté de la sortie et, dans la direction de rotation ou de mouvement (12) de l'outil de mélange et/ou de broyage (3) par rapport à la radiale (11) du récipient (1), parallèle à l'axe longitudinal (15), orientée vers l'extérieur, de l'axe de rotation (10) de l'outil de mélange et/ou de broyage (3) dans la direction de transport (17) de l'extrudeuse (5), d'une distance (18),
et **en ce que** la version comprimante de la vis sans fin (6) ne commence qu'à partir d'une distance (A) supérieure à 1,5 fois le diamètre (d) de la vis sans fin (6), mesurée à partir du bord (20') situé en aval dans la direction de transport de la vis sans fin (6) ou du point (20) de l'ouverture d'alimentation (80) situé le plus loin en aval,
le point de départ de la version comprimante de la vis sans fin (6) étant celui au niveau duquel l'angle d'inclinaison de la vis sans fin (6) devient ≥ 1° pour la première fois,
la vis sans fin (6) étant conçue, dans la zone avant le début de la version comprimante, de manière essentiellement sans compression ou décomprimante et l'angle d'inclinaison < 1°, l'angle d'inclinaison étant l'angle entre l'axe longitudinal central (15) de la vis sans fin (6) ou une parallèle de celui-ci et une droite ou une courbe passant par les points les plus bas de chaque filet de vis sans fin.

2. Dispositif selon la revendication 1, **caractérisé en ce que** la version comprimante de la vis sans fin (6) commence au niveau d'une distance (B) de maximum 3 fois, de préférence de maximum 20 fois le diamètre (d), mesurée à partir du bord (20') de l'ouverture d'alimentation (80), situé en aval de la direction de transport de la vis sans fin (6).

3. Dispositif selon la revendication 1 ou 2, **caractérisé en ce que** le rapport entre la longueur (L) de la vis sans fin (6), mesurée à partir du bord (20') de l'ouverture d'alimentation (80), situé en aval dans la direction de transport de la vis sans fin (6) jusqu'à l'ouverture de sortie (30) la plus proche, et le diamètre nominal (d) de la vis sans fin (6) ≥ 10, plus particulièrement ≥ 14.

4. Dispositif selon l'une des revendications 1 à 3, **caractérisé en ce que** la version comprimante de la vis sans fin (6) ne commence qu'à partir d'une distance (A) supérieure à 2 fois, de préférence 3 fois, le diamètre (d) de la vis sans fin (6), mesurée à partir du bord (20') de l'ouverture d'alimentation (80), situé en aval dans la direction de transport de la vis sans fin (6).

5. Dispositif selon l'une des revendications 1 à 4, **caractérisé en ce que** la longueur de la version comprimante de la vis sans fin (6) est de l'ordre de 0,5 à 7 fois, de préférence de 1 à 5 fois le diamètre (d) de la vis sans fin (6).

6. Dispositif selon l'une des revendications 1 à 5, **caractérisé en ce que**, pour une extrudeuse (5) reliée avec le récipient (1), le produit scalaire formé à partir du vecteur de direction de la direction de rotation (19), orientée de manière tangentielle par rapport au diamètre nominal du point le plus extérieur radialement de l'outil de mélange et/ou de broyage (3) ou de manière tangentielle au matériau de type matière plastique déplacé à travers l'ouverture (8) et de manière normale à une radiale (11) du récipient (1), pointant dans la direction de rotation ou de mouvement (12) de l'outil de mélange et/ou de broyage (3) et du vecteur de direction (17) de la direction de transport de l'extrudeuse (5) est négatif ou nul à chaque point ou dans toute la zone de l'ouverture (8) ou immédiatement radiale devant l'ouverture (8).

7. Dispositif selon l'une des revendications 1 à 6, **caractérisé en ce que** le vecteur de direction de la direction de rotation (19) du point le plus extérieur radialement de l'outil de mélange et/ou de broyage (3) et le vecteur de direction (17) de la direction de transport de l'extrudeuse (5) forment un angle (α) supérieur ou égal à 90° et inférieur ou égal à 180°, mesuré au niveau du point d'intersection des deux vecteurs de direction (17, 19), au niveau du bord de l'ouverture (8) du côté de l'entrée, situé en amont par rapport à al direction de rotation ou de mouvement (12) de l'outil de mélange et/ou de broyage (3), plus particulièrement au niveau du point (20), situé le plus loin en amont sur ce bord ou sur l'ouverture (8).

8. Dispositif selon l'une des revendications 1 à 7, **caractérisé en ce que** le vecteur de direction (19) de la direction de rotation ou de mouvement (12) et le vecteur de direction (17) de la direction de transport de l'extrudeuse (5) forment un angle (β) entre 170° et 180°, mesuré au niveau du point d'intersection des deux vecteurs de direction (17, 19) au centre de l'ouverture (8).

9. Dispositif selon l'une des revendications 1 à 8, **caractérisé en ce que** la distance (18) est supérieure ou égale au diamètre intérieur du boîtier (16) de l'extrudeuse (5) ou de la vis sans fin (6) et/ou supérieure ou égale à 7%, de préférence supérieure ou égale à 20% du rayon du récipient (1) ou **en ce que** la distance (18) est supérieure ou égale au rayon du récipient (1).

10. Dispositif selon l'une des revendications 1 à 8, **caractérisé en ce que** le prolongement imaginaire de l'axe longitudinal (15) de l'extrudeuse (5) est disposé à l'encontre de la direction de transport, à la manière d'une sécante de la section transversale du récipient (1) et traverse l'intérieur du récipient (1) au moins partiellement.

11. Dispositif selon l'une des revendications 1 à 8, **caractérisé en ce que** l'extrudeuse (5) est raccordée de manière tangentielle au récipient (1) ou s'étend de manière tangentielle à la section transversale du récipient (1) ou **en ce que** l'axe longitudinale (15) de l'extrudeuse (5) ou de la vis sans fin (6) ou l'axe longitudinal de la vis sans fin (6) la plus proche de l'ouverture d'alimentation (80) ou la paroi interne du boîtier (16) ou l'enveloppe de la vis sans fin (6) s'étend de manière tangentielle par rapport à l'intérieur de la paroi latérale (9) du récipient (1), la vis sans fin (6) étant de préférence reliée, au niveau de son côté frontal (7) à un dispositif d'entraînement et, au niveau de son autre extrémité frontale, à une ouverture de sortie disposée au niveau de l'extrémité frontale du boîtier (16), plus particulièrement une tête d'extrudeuse.

12. Dispositif selon l'une des revendications 1 à 11, **caractérisé en ce que** l'ouverture (8) est reliée directement et sans éloignement important, plus particulièrement sans trajectoire de transfert ou vis sans fin de transport, avec l'ouverture d'alimentation (80).

13. Dispositif selon l'une des revendications 1 à 12, **caractérisé en ce que** l'outil de mélange et/ou de broyage (3) comprend des outil et/ou des couteux (14) qui broient, coupent et chauffent le matériau de type matière plastique dans la direction de rotation ou de mouvement (12), les outils et/ou les couteaux (14) étant de préférence formés ou disposés sur ou au niveau d'un porte-outil (13) rotatif, plus particulièrement parallèle à la surface du fond (2), plus particulièrement un disque de support (13),
et/ou
**en ce que** les zones avant ou arêtes avant (22), pointant dans la direction de rotation et de mouvement (12) et agissant sur le matériau de type matière plastique, des outils de mélange et/ou de broyage (3) ou des couteaux (14) sont formées, positionnées, incurvées et/ou disposées différemment par rapport aux zones arrières dans la direction de rotation ou de mouvement (12).

14. Dispositif selon l'une des revendications 1 à 13, **caractérisé en ce que** le récipient (1) présente une forme globalement cylindrique avec une surface de fond (2) plate et une paroi latérale (9) de forme cylindrique orientée verticalement et/ou l'axe de rotation (10) des outils de mélange et/ou de broyage (3) coïncide avec l'axe central du récipient (1) et/ou l'axe de rotation (10) ou l'axe central sont orientés verticalement et/ou normalement par rapport à la surface du fond (2),
et/ou
**en ce que** le porte-outil (13) le plus bas ou le plus bas des outils de mélange et/ou de broyage (3) et/ou l'ouverture (8) sont disposés proche du fond à une faible distance de la surface du fond (2), plus particulièrement au niveau du quart inférieur de la hauteur du récipient (1), de préférence à une distance par rapport à la surface de fond (2) de 10 mm à 400 mm.

15. Dispositif selon l'une des revendications 1 à 14, **caractérisé en ce que** l'extrudeuse (5) est une extrudeuse à une seule vis sans fin (6) avec une seule vis sans fin (6) comprimante ou une extrudeuse à double vis sans fin ou à multiples vis sans fin, le diamètre d des différentes vis sans fin (6) étant tous différents les uns des autres.
